# EUROPEAN PATENT APPLICATION

(11) **EP 4 787 190 A1**
(43) Date of publication of application: **05.08.2026**
(21) Application number: 26150946.7
(22) Date of filing: 09.01.2026
(51) Int. Cl.: G06F 16/904

(54) **AUTOMATED ANALYTICAL CONTENT GENERATION USING LARGE LANGUAGE MODELS**

(30) Priority: 31.01.2025 US 202519042681
(71) Applicant: Intuit Inc., Mountain View, CA 94043 (US)
(72) Inventor: SRIVASTAVA, Ashok, Mountain View, 94043 (US); KUMAR, Sricharan Kallur Palli, Mountain View, 94043 (US); HO, Nhung, Mountain View, 94043 (US); MOTURU, Tapasvi, Mountain View, 94043 (US); SUBRAHMANIAM, Vignesh Thirukazhukundram, Mountain View, 94043 (US)
(74) Representative: D Young & Co LLP

(57) **Abstract**

Aspects of the present disclosure relate to automated analytical content generation. Embodiments include receiving data from one or more data sources. Embodiments further include extracting trends from the data using a heuristic algorithm. Embodiments further include providing an input based on the extracted trends to a generative machine learning model that has been configured to generate content based on extracted trends. Embodiments further include receiving, from the generative machine learning model based on the input, content that represents the extracted trends. Embodiments further include displaying the content via a user interface.

## Description

### INTRODUCTION

Aspects of the present disclosure relate to techniques for automatically generating analytical content based on received data. In particular, techniques described herein involve using heuristic algorithms to extract trends from received data and using a generative machine learning model to generate content based on the extracted trends.

### BACKGROUND

Every year, millions of people, businesses, and organizations around the world perform analysis tasks using data. For example, administrators of a software application may evaluate data to monitor the performance of the software application and correct issues. As another example, a business may analyze earnings reports to detect trends and make strategic adjustments based on the trends.

However, in many instances, datasets may be too large and/or complicated to be effectively analyzed. For example, many important trends may be overlooked by manual analysis. The analysts may be unable to distill the information within the dataset to differentiate between relevant and irrelevant data points and time windows. Furthermore, while automated techniques for analyzing data exist, these techniques often fail to present analysis in a way that can be effectively utilized by an analyst. For example, while existing automated techniques can detect upward and downward trends in data and generate alerts based on the trends, these techniques may not present the alerts in a concisely organized manner that is useful for gaining insights from the data

Thus, there is a need in the art for improved techniques of automated analytical content generation.

### BRIEF SUMMARY

Particular embodiments are set out in the independent claims. Various optional examples are set out in the dependent claims. Certain embodiments provide a method of automated analytical content generation. The method generally includes: receiving data from one or more data sources; extracting trends from the data using a heuristic algorithm; providing an input based on the extracted trends to a generative machine learning model that has been configured to generate content based on extracted trends; receiving, from the generative machine learning model based on the input, content that represents the extracted trends; and displaying the content via a user interface.

Other embodiments provide processing systems configured to perform the aforementioned method as well as those described herein; non-transitory, computer-readable media comprising instructions that, when executed by one or more processors of a processing system, cause the processing system to perform the aforementioned methods as well as those described herein; a computer program product embodied on a computer readable storage medium comprising code for performing the aforementioned method as well as those further described herein; and a processing system comprising means for performing the aforementioned method as well as those further described herein.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts an example of computing components related to automated analytical content generation.
**FIG. 2** depicts an additional example of computing components related to automated analytical content generation.
**FIG. 3** depicts an example user interface for displaying analytical content.
**FIG. 4** depicts example operations related to automated analytical content generation.
**FIG. 5** depicts an example of a processing system for automated analytical content generation.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for automated analytical content generation.

According to certain embodiments, data is received from one or more data sources. The data may be aggregated and a heuristic algorithm (e.g., a greedy algorithm) may be used to identify trends in the data. The identified trends may include upward and downward shifts in data (and/or a lack of shifts), correlations between variables, anomalies, and/or the like. The heuristic algorithm may be used to identify a time window in the time-series data in which the trend is present. The data that corresponds to the identified window may be provided as part of an input to a generative machine learning model. The input may further include a prompt that is generated/selected based on input from a user that indicates preferences regarding content to be generated (e.g., a modality for the content, a level of detail/complexity for the content, and/or the like). Based on the input, the generative machine learning model may generate an output that includes content that illustrates the identified trends according to user preferences. For example, the content may comprise a video presentation that includes one or more charts that describe the trends with a level of detail and complexity specified by the user.

Embodiments of the present disclosure provide numerous technical and practical effects and benefits. For example, by automatically identifying trends and the time windows in which the trends occur, techniques disclosed herein enable the automated generation of content that prevents users from missing trends that may otherwise be overlooked in a way that was not possible with existing automated analysis techniques. Furthermore, in some embodiments, this identification may be achieved with little to no human interaction (although in other embodiments, the identification may be based on extensive interactions with the user). Additionally, generating content based on identifying a relevant time window for a trend prevents anomalous and/or erroneous results that may otherwise occur during automated analytical content generation according to prior art techniques. For example, existing techniques for automated data analysis may involve providing an entire dataset to a generative machine learning model. When provided with the entire dataset, a generative machine learning model may hallucinate due to being presented with too much data, generating content that indicates false trends and/or the like. However, by utilizing a hybrid approach that uses both heuristic algorithms and generative machine learning technologies, techniques described herein reduce the frequency of hallucinations by limiting the data provided to the generative machine learning model to relevant time windows that contain potential trends. Also, by limiting the amount of data that is provided to the generative machine learning model, embodiments disclosed herein allow for significant reduction in the amount of computing resources required to generate analytical content based on data. For example, applying a heuristic algorithm to narrow the set of data analyzed by the generative machine learning model (and then analyzing the narrowed dataset using the generative model) may require significantly less resources than analyzing the entire body of data using the generative machine learning model.

Furthermore, by generating analytical content based on prompts that are generated based on user preferences, embodiments described herein provide additional guardrails that ensure the generated content will be relevant and useful to the users. As a result, aspects of the present disclosure enable automated generation of content from which users may be better able to understand the trends depicted in the generated content and perform tasks in response to the trends (e.g., the tasks may relate to correcting issues with a software application based on negative trends in performance data, adjusting business strategies based on sales trends, and/or the like).

### Example of Computing Components Related to Automated Analytical Content Generation

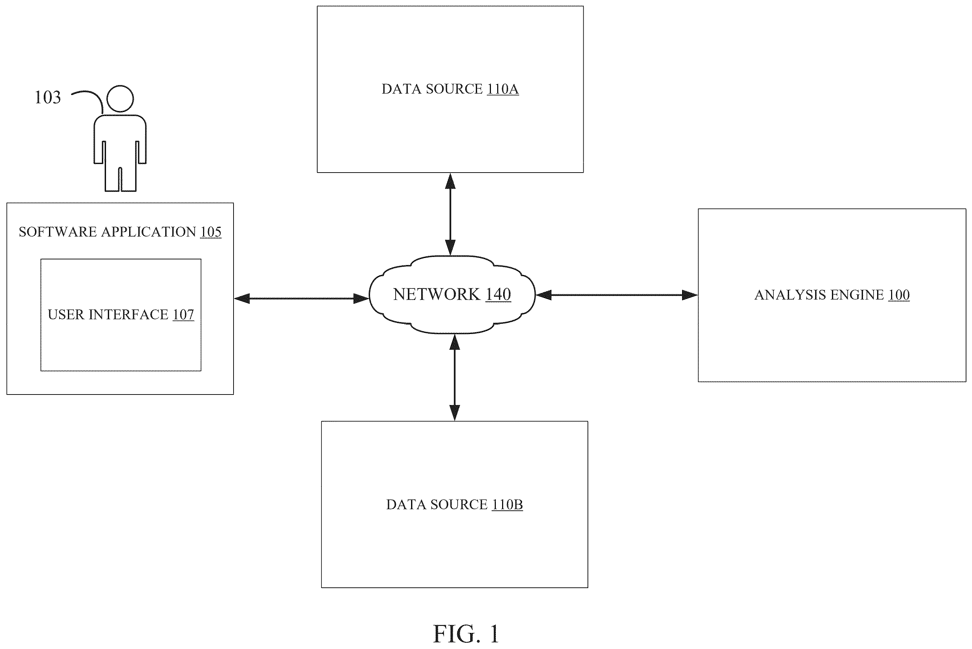

**FIG. 1** depicts an example of computing components related to automated analytical content generation.

A user 103 may interact with a software application 105 via a user interface 107. The software application 105 may use analysis engine 100 to analyze data from data sources such as data sources 110A and 110B. The data sources may generally be any source of any type of data. For example, data sources 110A and 110B may each be software applications, databases, and/or the like. Software application 105 may also be a data source. The data may be, for example, performance data or usage data associated with a software application, financial data such as sales data, other data associated with users of a software or service, and/or the like.

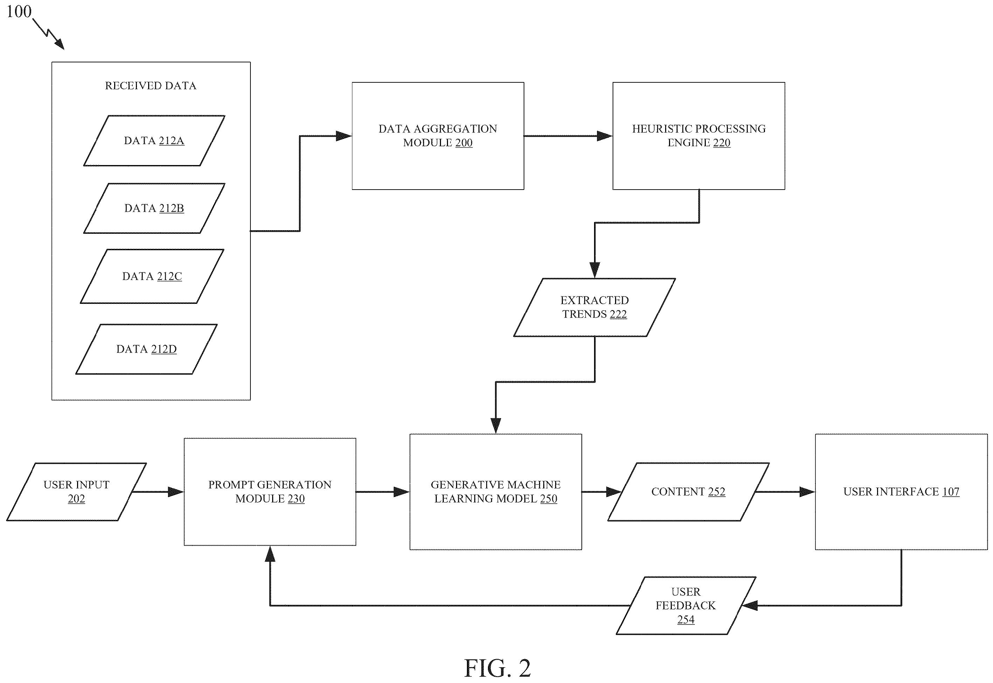

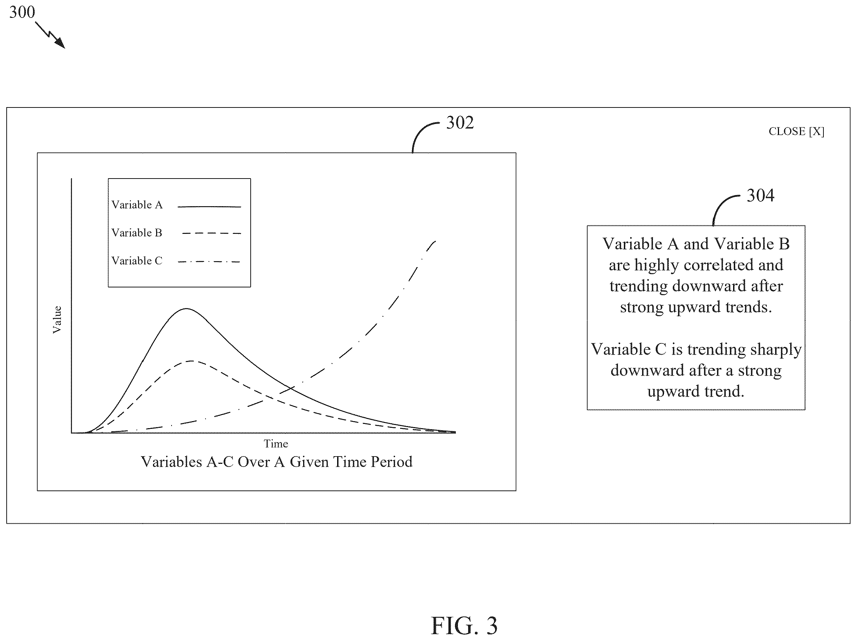

As described in further detail below with respect to **FIG. 2****,** analysis engine 100 may identify trends, or insights, in the data and generate content based on the identified trends. For example, the trends may comprise upward and/or downward shifts in variables, correlations between variables, indications that one variable contributes to another variable, lack of a change in a variable, anomalies, other data insights, and/or the like. As discussed in further detail below with respect to **FIG. 3****,** the generated content may comprise charts, graphs, other visual representations, text descriptions, audio descriptions, videos, and/or the like.

The software application 105, the analysis engine 100, and the data sources 110A and 110B may interact over network 140. Network 140 may be any connection over which data may be transmitted. In one example, network 140 is the Internet. As a result, embodiments of the present disclosure may be deployed on a large scale, which allows for compounding the efficiency and reliability benefits discussed above. For example, embodiments disclosed herein allow for streaming personalized content to millions of users of a software application simultaneously.

**FIG. 2** depicts an additional example of computing components related to automated analytical content generation. In particular, **FIG. 2** depicts functionality associated with analysis engine 100 of **FIG. 1****.**

Data 212A-D may be received. The data 212A-D may comprise any type of data. As an example, the data 212A-D may comprise performance data associated with a system (e.g., a computing system), financial data, usage data (e.g., traffic data associated with a website), data related to healthcare (e.g., biometric data), and/or the like. Data 212A-D may each be from different sources (or the same source). For example, data 212A may be from a first software application, data 212B may be from a second software application, data 212C may be from a third software application, and data 212D may be from a fourth software application.

The data 212A-D may be provided to an aggregation module 200. The aggregation module 200 may be a computing component that is configured to aggregate data. For example, each of data 212A-D may represent sales data from different sources. Data 212A may represent the amount of units of a product sold on one website, data 212B may represent the amount of units of the same product sold on another website, and so on. Data aggregation module 200 may combine the data from each source into a single dataset. The aggregation may be performed by merging tables, files, and/or other entities that contain data (and/or creating a new entity that contains all the data from within the received entities).

Certain embodiments provide that one or more modality transformation techniques may be used to convert the data into a modality that is compatible with the heuristic processing engine 220. For example, image-to-text systems may be used to convert images of documents into electronic data that can be processed by the heuristic processing engine 220. In some embodiments, a generative machine learning model may be trained to convert data from one modality into a modality that is compatible with the heuristic processing engine 220. For example, the machine learning model may be trained through a supervised learning process involving providing the model with an input comprising data that corresponds to a first modality, receiving an output from the model, and adjusting parameters of the model until the output matches a ground truth representation of the data in a modality that is compatible with heuristic processing engine 220. Thus, users may seamlessly interact with the content generation system by providing images of documents that contain data to be processed.

The aggregated data may be provided as part of an input to the heuristic processing engine 220. The heuristic processing engine 220 may comprise a computing component that is configured to apply a heuristic algorithm to identify trends in the data. For example, the heuristic algorithm may comprise a greedy algorithm, a Gaussian regression algorithm, and/or the like. The heuristic algorithm may be used to evaluate various time windows in time series data to identify a window that contains a trend. The time windows may comprise various lengths of time as well as various periods in time. Examples of time windows may include years, months, weeks, days, hours, and/or any other unit of measuring time. For example, a time window may comprise data from the previous month before the current time. As another example, a time window may comprise a two day period that occurred five months ago. Once a time window that contains a trend is identified, the data corresponding to the identified time period (extracted trends 222) may be provided as part of an input to the generative machine learning model 250. The identified trend may comprise an upward/downward trend in the value of a variable, a lack of change in a variable, a correlation between two or more variables, an anomaly in data, and/or the like.

In some embodiments, the heuristic processing engine 220 may analyze data within a set of predefined windows of time. The set of windows may comprise windows that are frequently chosen for analytical purposes. As an example, the predefined windows may include the preceding week, the preceding month, the preceding three months (e.g., the previous fiscal quarter), the preceding year (e.g., the previous fiscal year), and/or the like.

In certain embodiments, the heuristic processing engine 220 comprises a machine learning model such as a tree-based model. A tree-based model (e.g., a decision tree) makes a classification by dividing the inputs into smaller classifications (at nodes), which result in an ultimate classification at a leaf. Boosting, or gradient boosting, is a method for optimizing tree models. Boosting involves building a model of trees in a stage-wise fashion, optimizing an arbitrary differentiable loss function. In particular, boosting combines weak "learners" into a single strong learner in an iterative fashion. A weak learner generally refers to a classifier that chooses a threshold for one feature and splits the data on that threshold, is trained on that specific feature, and generally is only slightly correlated with the true classification (e.g., being at least more accurate than random guessing). A strong learner is a classifier that is arbitrarily well-correlated with the true classification, which may be achieved through a process that combines multiple weak learners in a manner that optimizes an arbitrary differentiable loss function. The process for generating a strong learner may involve a majority vote of weak learners. Examples of boosted tree models include XGBoost and LightGBM. A random forest extends the concept of a decision tree model, except the nodes included in any given decision tree within the forest are selected with some randomness. Thus, random forests may reduce bias and group outcomes based upon the most likely positive responses. In some embodiments, decision trees are learned from training data (e.g., historical data) by using a heuristic algorithm (e.g., a greedy algorithm) that follows the problem solving heuristic of making the locally optimal choice at each stage with the hope of finding a global optimum.

The machine learning model may be trained based on supervised, unsupervised, semi-supervised, or reinforcement learning techniques. Supervised learning techniques generally involve providing training inputs to a machine learning model. The machine learning model processes the training inputs and outputs predictions based on the training inputs. The predictions are compared to known labels associated with the training inputs to determine the accuracy of the machine learning model, and parameters of the machine learning model are iteratively adjusted until one or more conditions are met. For instance, the one or more conditions may relate to an objective function (e.g., a cost function or loss function) for optimizing one or more variables (e.g., model accuracy). In some embodiments, the conditions may relate to whether the predictions produced by the machine learning model based on the training inputs match the known labels associated with the training inputs or whether a measure of error between training iterations is not decreasing or not decreasing more than a threshold amount. The conditions may also include whether a training iteration limit has been reached. Model parameters adjusted during training may include, for example, hyperparameters, values related to numbers of iterations, weights, functions used by nodes to calculate scores, level of randomness, and/or the like. In some embodiments, validation and testing are also performed for a machine learning model, such as based on validation data and test data, as is known in the art. It is noted that "training" as used herein may refer to initial training, re-training, and/or fine tuning of a machine learning model, such as the generative machine learning model 250, a machine learning model used by heuristic processing engine 220, and/or other machine learning models described herein.

A supervised learning process for the machine learning model of the heuristic processing engine 220 may comprise providing a training input to the machine learning model. The training input may comprise a dataset, and an output may be generated based on the training input. The output may be compared to a ground truth output that indicates actual trends in the training data (e.g., ground truth may be based on manual input indicating actual trends in the training data), and parameters of the model may be iteratively adjusted based on a variance between the output generated by the model and the ground truth output until a condition is met (e.g., until the output matches the ground truth by a threshold amount). In some embodiments, the ground truth is based on benchmarks for data values such that the machine learning model, when trained based on the ground truth, the machine learning model is tailored to the baseline values for a specific domain.

According to some embodiments, trends may be extracted based on a confidence score associated with the extracted trend. For example, the machine learning model may generate a confidence score indicating the likelihood that an extracted item is a trend. If the confidence score generated with respect to a potential trend fails to exceed a threshold, this may indicate that the identified data does not actually correspond to a trend. Thus, if the confidence score does not exceed a threshold, the trend may be excluded for the report, flagged as a potential trend for the user, and/or the like. If the confidence score exceeds the threshold, this may serve as confirmation that the identified data corresponds to a trend, and the trend may be included in the generated content.

In some embodiments, the extracted trends may be assigned a relevance score. For example, the relevance score may be calculated as a function of the magnitude of a trend, the duration of a trend, the magnitude of the variance of the residuals after subtraction of the identified trend from the variable in the subset, a weight for the variable and/or a weight for the variable over the window in which the trend is extracted. Content 252 may be generated based on the relevance score. For example, trends with higher relevance scores may be indicated/featured more prominently in the content 252 than trends with lower relevance scores. As another example, the content 252 can include a list of trends that are ranked based on relevance score. The weights used by a machine learning model of the heuristic processing 220 engine in computing the relevance score may be learned continually through a reinforcement learning algorithm that assigns higher scores to trends that users find helpful as indicated by user feedback 254 provided by the users.

As mentioned above, the extracted trends 222 may be provided as part of the input to the generative machine learning model 250. The input may further comprise a prompt that is generated/selected by prompt generation module 230. Prompt generation module 230 may comprise a computing component that is configured to select prompts from a set of existing prompts and/or generate new prompts based on user input 202. In an example embodiment, the prompts may be generated by populating a prompt template based on user input 202.

The user input 202 may comprise an indication of a type of content 252 for the generative machine learning model 250 to generate. For example, the user input 202 may comprise a selection of an option regarding the level of complexity and/or detail for the content 252. As another example, the user input 202 may comprise a selection of an option regarding the modality of the content 252. For instance, the indicated modality may comprise one or more of a video, image, chart, table, graph, text, and/or the like. Other options regarding generated content 252 may include stylistic options, such as font size, color, duration, brightness, other preferences, and/or the like. Thus, the generated content may be tailored to the preferences of particular users and/or applications.

Certain embodiments may involve an interactive, conversational user interface that allows users to specify the type of content to be generated and/or provide feedback regarding generated content. The interface may present prompts generated by a generative machine learning model (e.g., a model configured to function as an artificial intelligence agent) that is configured to guide the user to provide the user input 202 described above. For example, the user may be asked what type of trends the user wants to track. The user may then be prompted to specify preferences regarding the content, such as a preferred modality, style, and/or the like. After the content is generated and provided to the user, the user may be prompted to provide feedback regarding the content. For instance, the user may be asked if the content is accurate, or the user may be asked how the content can be improved visually.

According to some embodiments, the prompt generation module 230 may comprise a machine learning model that is trained and/or otherwise configured to generate prompts based on the user input 202. In such embodiments, the user input 202 may comprise a natural language input. An embedding representation of the natural language input may be created in certain embodiments. The machine learning model may generate a prompt based on the input. The training process for the machine learning model may comprise providing an input to the model, receiving an output based on the input, comparing the output to a ground truth prompt, and iteratively adjusting parameters of the model based on the variance until a condition is met (e.g., until the output matches the ground truth).

Based on the provided input, which may comprise the extracted trends 222 and/or a prompt generated by the prompt generation module 230, the generative machine learning model 250 may generate content 252. The generative machine learning model 250 may comprise a large language model (LLM). The generative machine learning model 250 may be trained through a supervised learning process comprising providing a training prompt and/or training trends as input to the generative machine learning model, receiving an output comprising generated content from the generative machine learning model 250, and iteratively adjusting parameters of the generative machine learning model 250 based on a variance between the generated content and a training output that comprises ground truth content (e.g., a version of content for the training input that has been verified as acceptable, correct, and/or the like). For example, the comparison may be performed based on creating embedding representations of the generated content and the ground truth content and comparing the embedding representations using a semantic similarity algorithm. The iterative adjustment may be performed until one or more conditions are met (e.g., until the semantic similarity exceeds a threshold).

The content 252 may comprise one or more of a video, image, chart, table, graph, text and/or the like that depicts the extracted trends 222 in a way that the user may understand. The content may be displayed via user interface 107, as described in further detail below with respect to **FIG. 3****.**

The user may provide user feedback 254 based on the content 252. The user feedback 254 may comprise user input similar to user input 202. For example, the user feedback 254 may comprise a selection of one or more options regarding the content and/or natural language input. The user feedback may also indicate errors in the content (e.g., formatting errors and/or errors in trend analysis/detection). A new prompt may be generated based on the user feedback 254 and provided as part of an input to generative machine learning model 250. One or more machine learning models of analysis engine 100 may be retrained based on the user feedback 254 (e.g., through a supervised learning process or a reinforcement learning process), thus allowing the models to be iteratively improved. For example, based on the feedback, labeled training data may be generated (e.g., automatically) and used to retrain the generative machine learning model 300 and/or a machine learning model used by heuristic processing engine 220. For instance, if the feedback indicates that a trend was not identified, the missed trend may be labeled as a trend and used to retrain a machine learning model used by heuristic processing engine 220 (e.g., parameters of the machine learning model may be iteratively adjusted until an output of the model indicates the trend. Updated content may be generated based on the new prompt and/or based on the output of a retrained model.

According to some embodiments, in response to a change in a data source (and/or in response to receiving additional data), additional data may be retrieved, additional trends may be extracted from the data, and additional content may be generated based on the additional trends. For example, if new and/or updated data is received, new content may be generated based on the new/updated data.

### Example User Interface for Displaying Analytical Content

**FIG. 3** depicts an example of a user interface 300 for displaying analytical content according to certain embodiments.

As shown in **FIG. 3****,** the user interface 300 displays example analytical content generated by analysis engine 100 of **FIG. 1** and **FIG. 2****.** The content includes a graph 302 that tracks the value of three variables with respect to time. The user interface 300 also includes a text description 304 of the chart. The chart 302 and description 304 may be content that was generated based on time series data relating to Variable A, Variable B, and Variable C. The sharp upward trends in Variable C, the sharp upward and then downward trends in Variable A and Variable B, as well as the correlation between Variable A and Variable B may have been identified by the heuristic algorithm as trends. The data corresponding to each variable from the time window in which the trends occurred may have been provided to the generative machine learning model. The generative machine learning model may have then generated the chart 302 and description 304 based on the data and/or user input. For example, the user input may have specified that the content comprise one or more charts with a text description of the content of the charts. In some embodiments, one or more charts and/or text descriptions such as those shown in **FIG. 3** may be presented to the user in a video. Alternatively, the text descriptions may be audio descriptions (e.g., a generated audio clip may read the text instead of or in addition to the text being visually presented to the user).

### Example Operations Related to Automated Feedback Analysis

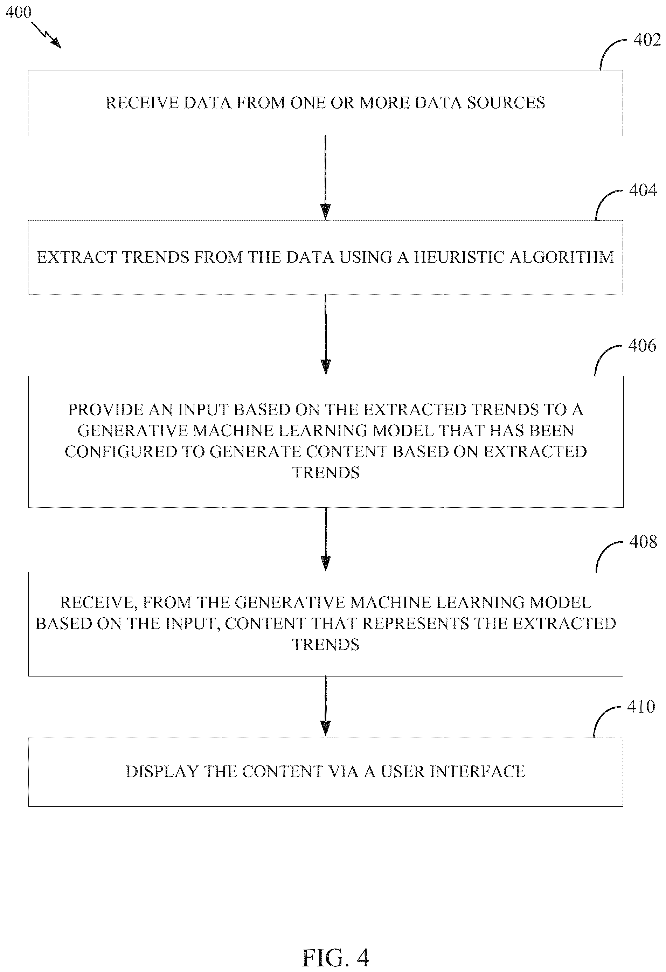

**FIG. 4** depicts example operations 400 related to automated feedback analysis. For example, operations 400 may be performed by one or more of the components described with respect to **FIG. 1** and **FIG. 2****.**

Operations 400 begin at step 402 with receiving data from one or more data sources.

Operations 400 continue at step 404 with extracting trends from the data using a heuristic algorithm. Certain embodiments provide that the trends comprise an increase in a value of a variable over a given time window or a decrease in the value of the variable over the given time window. In certain embodiments, the trends comprise an indication of a correlation between variables over a particular time window. Some embodiments provide that the extracting is based on using the heuristic algorithm to identify a time window that contains a trend. According to certain embodiments, the extracting is based on using the heuristic algorithm with respect to each time window of a set of time windows. In certain embodiments, a relevance score is assigned to the extracted trends based on weights associated with the heuristic algorithm, wherein the weights are determined through a reinforcement learning process.

Operations 400 continue at step 406 with providing an input based on the extracted trends to a generative machine learning model that has been configured to generate content based on extracted trends. In some embodiments, the input comprises a prompt that is generated based on user input indicating user preferences regarding generated content. Certain embodiments provide that the generative machine learning model is trained through a supervised learning process comprising: providing a training input to the generative machine learning model, wherein the training input comprises particular extracted trends and an indication of content to generate based on the particular extracted trends; receiving a given output from the generative machine learning model based on the training input; and iteratively adjusting parameters of the generative machine learning model based on a variance between the given output and a training output. In certain embodiments, the content is generated based on relevance scores assigned to the extracted trends using the heuristic algorithm.

Operations 400 continue at step 408 with receiving, from the generative machine learning model based on the input, content that represents the extracted trends. In some embodiments, the content comprises a video.

Operations 400 continue at step 410 with displaying the content via a user interface.

According to some embodiments, operations 400 further comprise extracting additional trends and generating updated content based on a change occurring within a data source.

Certain embodiments provide that operations 400 further comprise generating updated content based on user feedback.

### Example of a Processing System for Automated Feedback Analysis

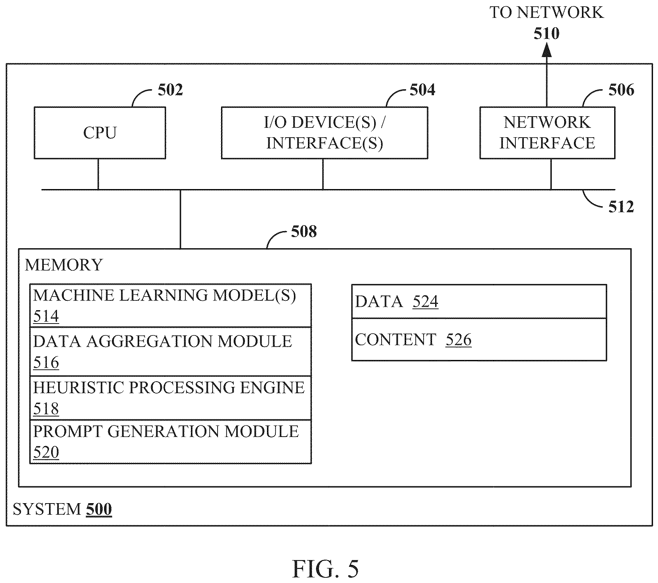

**FIG. 5** illustrates an example system 500 with which embodiments of the present disclosure may be implemented. For example, system 500 may be configured to perform operations 400 of **FIG. 4** and/or to implement one or more components as in **FIG. 1** or **FIG. 2****.**

System 500 includes a central processing unit (CPU) 502, one or more I/O device interfaces that may allow for the connection of various I/O devices 504 (e.g., keyboards, displays, mouse devices, pen input, etc.) to the system 500, network interface 506, a memory 508, and an interconnect 512. It is contemplated that one or more components of system 500 may be located remotely and accessed via a network 510. It is further contemplated that one or more components of system 500 may comprise physical components or virtualized components.

CPU 502 may retrieve and execute programming instructions stored in the memory 508. Similarly, the CPU 502 may retrieve and store application data residing in the memory 508. The interconnect 512 transmits programming instructions and application data, among the CPU 502, I/O device interface 504, network interface 506, and memory 508. CPU 502 is included to be representative of a single CPU, multiple CPUs, a single CPU having multiple processing cores, and other arrangements.

Additionally, the memory 508 is included to be representative of a random access memory or the like. In some embodiments, memory 508 may comprise a disk drive, solid state drive, or a collection of storage devices distributed across multiple storage systems. Although shown as a single unit, the memory 508 may be a combination of fixed and/or removable storage devices, such as fixed disc drives, removable memory cards or optical storage, network attached storage (NAS), or a storage area-network (SAN).

As shown, memory 508 includes machine learning model(s) 514, data aggregation module 516, heuristic processing engine 518, and prompt generation module 520. Machine learning model(s) 514 may be representative of generative machine learning model 250 of **FIG. 2****.** In some embodiments, data aggregation module 516 may be representative of data aggregation module 200 of **FIG. 2****.** Heuristic processing engine 518 may be representative of heuristic processing engine 220 of **FIG.** 2. Prompt generation module 520 may be representative of prompt generation module 230 of **FIG. 2****.**

Memory 508 further comprises data 524, which may correspond to data 212A-D of **FIG. 2****.** Memory 508 further comprises content 526 which may correspond to content 252 of **FIG. 2****.**

It is noted that in some embodiments, system 500 may interact with one or more external components, such as via network 510, in order to retrieve data and/or perform operations.

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Thus, from one perspective, there has now been described automated analytical content generation. Embodiments include receiving data from one or more data sources. Embodiments further include extracting trends from the data using a heuristic algorithm. Embodiments further include providing an input based on the extracted trends to a generative machine learning model that has been configured to generate content based on extracted trends. Embodiments further include receiving, from the generative machine learning model based on the input, content that represents the extracted trends. Embodiments further include displaying the content via a user interface.

Further examples of feature combinations taught by the present disclosure are set out in the following numbered clauses:
1. A method of automated analytical content generation, comprising:
   receiving data from one or more data sources;
   extracting trends from the data using a heuristic algorithm;
   providing an input based on the extracted trends to a generative machine learning model that has been configured to generate content based on extracted trends;
   receiving, from the generative machine learning model based on the input, content that represents the extracted trends; and
   displaying the content via a user interface.
2. The method of clause 1, wherein the trends comprise an increase in a value of a variable over a given time window or a decrease in the value of the variable over the given time window.
3. The method of clause 1 or 2, wherein the trends comprise an indication of a correlation between variables over a particular time window.
4. The method of any preceding clause, further comprising extracting additional trends and generating updated content based on a change occurring within a data source.
5. The method of any preceding clause, wherein the extracting is based on using the heuristic algorithm to identify a time window that contains a trend.
6. The method of any preceding clause, wherein the extracting is based on using the heuristic algorithm with respect to each time window of a set of time windows.
7. The method of any preceding clause, wherein the input comprises a prompt that is generated based on user input indicating user preferences regarding generated content.
8. The method of any preceding clause, further comprising generating updated content based on user feedback.
9. The method of any preceding clause, wherein the generative machine learning model is trained through a supervised learning process comprising:
   providing a training input to the generative machine learning model, wherein the training input comprises particular extracted trends and an indication of content to generate based on the particular extracted trends;
   receiving a given output from the generative machine learning model based on the training input; and
   iteratively adjusting parameters of the generative machine learning model based on a variance between the given output and a training output.
10. The method of any preceding clause, wherein the content comprises a video.
11. The method of any preceding clause, wherein the content is generated based on assigning relevance scores to the extracted trends based on weights associated with the heuristic algorithm, wherein the weights are learned through a reinforcement learning process.
12. A system for automated analytical content generation, comprising:
   one or more processors; and
   a memory comprising instructions that, when executed by the one or more processors, cause the system to:
      receive data from one or more data sources;
      extract trends from the data using a heuristic algorithm;
      provide an input based on the extracted trends to a generative machine learning model that has been configured to generate content based on extracted trends;
      receive, from the generative machine learning model based on the input, content that represents the extracted trends; and
      display the content via a user interface.
13. The system of clause 12, wherein the trends comprise an increase in a value of a variable over a given time window or a decrease in the value of the variable over the given time window.
14. The system of clause 12 or 13, wherein the trends comprise an indication of a correlation between variables over a particular time window.
15. The system of clause 12, 13 or 14, wherein the instructions further cause the system to extract additional trends and generate updated content based on a change occurring within a data source.
16. The system of any of clause 12 to 15, wherein the extracting is based on using the heuristic algorithm to identify a time window that contains a trend.
17. The system of any of clause 12 to 16, wherein the extracting is based on using the heuristic algorithm with respect to each time window of a set of time windows.
18. The system of any of clause 12 to 17, wherein the instructions further cause the system to generate updated content based on user feedback.
19. The system of any of clause 12 to 18, wherein the generative machine learning model is trained through a supervised learning process comprising:
   providing a training input to the generative machine learning model, wherein the training input comprises particular extracted trends and an indication of content to generate based on the particular extracted trends;
   receiving a given output from the generative machine learning model based on the training input; and
   iteratively adjusting parameters of the generative machine learning model based on a variance between the given output and a training output.
20. A method of automated analytical content generation, comprising:
   receiving data from one or more data sources;
   extracting trends from the data using a heuristic algorithm;
   assigning a relevance score to the extracted trends based on weights associated with the heuristic algorithm, wherein the weights are determined through a reinforcement learning process;
   providing an input based on the extracted trends and the assigned relevance scores to a generative machine learning model that has been configured to generate content based on extracted trends;
   receiving, from the generative machine learning model based on the input, content that represents the extracted trends; and
   displaying the content via a user interface.

## Claims

1. A method of automated analytical content generation, comprising:
receiving data from one or more data sources;
extracting trends from the data using a heuristic algorithm;
providing an input based on the extracted trends to a generative machine learning model that has been configured to generate content based on extracted trends;
receiving, from the generative machine learning model based on the input, content that represents the extracted trends; and
displaying the content via a user interface.

2. The method of claim 1, wherein the trends comprise an increase in a value of a variable over a given time window or a decrease in the value of the variable over the given time window.

3. The method of claim 1 or 2, wherein the trends comprise an indication of a correlation between variables over a particular time window.

4. The method of any preceding claim, further comprising extracting additional trends and generating updated content based on a change occurring within a data source.

5. The method of any preceding claim, wherein the extracting is based on using the heuristic algorithm to identify a time window that contains a trend.

6. The method of any preceding claim, wherein the extracting is based on using the heuristic algorithm with respect to each time window of a set of time windows.

7. The method of any preceding claim, wherein the input comprises a prompt that is generated based on user input indicating user preferences regarding generated content.

8. The method of any preceding claim, further comprising generating updated content based on user feedback.

9. The method of any preceding claim, wherein the generative machine learning model is trained through a supervised learning process comprising:
providing a training input to the generative machine learning model, wherein the training input comprises particular extracted trends and an indication of content to generate based on the particular extracted trends;
receiving a given output from the generative machine learning model based on the training input; and
iteratively adjusting parameters of the generative machine learning model based on a variance between the given output and a training output.

10. The method of any preceding claim, wherein the content comprises a video.

11. The method of any preceding claim, wherein the content is generated based on assigning relevance scores to the extracted trends based on weights associated with the heuristic algorithm, wherein the weights are learned through a reinforcement learning process.

12. A system for automated analytical content generation, comprising:
one or more processors; and
a memory comprising instructions that, when executed by the one or more processors, cause the system to:
receive data from one or more data sources;
extract trends from the data using a heuristic algorithm;
provide an input based on the extracted trends to a generative machine learning model that has been configured to generate content based on extracted trends;
receive, from the generative machine learning model based on the input, content that represents the extracted trends; and
display the content via a user interface.

13. The system of claim 12, wherein the trends comprise an increase in a value of a variable over a given time window or a decrease in the value of the variable over the given time window.

14. The system of claim 12 or 13, wherein the trends comprise an indication of a correlation between variables over a particular time window.

15. The system of claim 12, 13 or 14, wherein the instructions further cause the system to extract additional trends and generate updated content based on a change occurring within a data source.
